# EUROPEAN PATENT APPLICATION

(11) **EP 3 825 280 A1**
(43) Date of publication of application: **26.05.2021**
(21) Application number: 19842119.0
(22) Date of filing: 29.07.2019
(51) Int. Cl.: C01B 39/26

(54) **MORDENITE ZEOLITE HAVING EXCELLENT PARTICLE UNIFORMITY AND METHOD FOR PREPARING SAME**

(30) Priority: 27.07.2018 KR 20180088062
(71) Applicant: SK Innovation Co., Ltd., Seoul 03188 (KR)
(72) Inventor: CHEON, Young-Eun, Daejeon 34124 (KR); KIM, Yeon-Ho, Daejeon 34124 (KR); LEE, Chang-Q, Daejeon 34124 (KR)
(74) Representative: Thoma, Michael
(86) International application number: PCT/KR2019/009432
(87) International publication number: WO 2020/022868

(57) **Abstract**

The present invention pertains to a mordenite zeolite having excellent particle uniformity, and a method for preparing same, the method comprising: a step for providing an aqueous solution in which a silica precursor is dissolved; a step for providing an aqueous solution in which a structure-inducing substance and an alumina precursor are dissolved; a step for providing an aqueous solution in which a surfactant is dissolved; a step for preparing a silica-alumina aqueous solution by mixing and stirring the basic silica suspension and the alumina aqueous solution; a step for preparing a zeolite synthesis composition by adding the surfactant aqueous solution to the silica-alumina aqueous solution; a step for gelling the zeolite synthesis composition; and a step for crystallizing the gelled zeolite synthesis composition.

## Description

### [Technical Field]

The present invention relates to a mordenite zeolite having excellent particle uniformity and a method for preparing the same.

### [Background Art]

In recent years, the development of functional materials has been increasingly required, and thus it is increasingly required to develop new materials having excellent physical properties and newly-added functions.

Nanoporous organic-inorganic materials or porous organic-inorganic hybrid materials, organometallic skeletons, or porous inorganic porous materials have characteristics such as structural diversity, a large number of active sites, a large specific surface area, and a large pore volume, and are thus widely used as catalysts, adsorbents, membranes, drug delivery materials, electronic materials or the like. Such porous materials are most useful as catalysts and adsorbents, and are classified as microporous materials (<2nm), mesoporous materials (2-50nm), or macroporous materials (>50nm) according to the size of the pores.

Zeolites, representative of microporous materials, are composed of crystalline aluminosilicate, and owing to characteristics such as a large specific surface area, a large pore volume, and uniform micropores, zeolites are widely used for catalytic reactions, in which the size or shape of molecules is selectable, such as Friedel-Craft Acylation, Friedel-Craft Alkylation, or Claisen-Schmidt reaction.

In the related art, there have been ongoing attempts to achieve desired actions and functions by controlling the pore distribution and surface of zeolites.

For example, KR 2011-0019804 (published on August 21, 2009) relates to a method of manufacturing an organic-inorganic hybrid nanoporous material, an organic-inorganic hybrid nanoporous material obtained by the method, and a use thereof, and uses tri (C₁-C₇) alkyl-1, 3, 5-benzenetricarboxylate as an organic ligand to provide a method of preparing an aluminum organic-inorganic hybrid nanoporous material having high crystallinity and a pure zeolite MTN structure, and an adsorbent or a heterogeneous catalyst using the nanoporous material.

In addition, JP 2005-254236 (published on September 22, 2005) relates to a mordenite-type zeolite alkylation catalyst and provides a mordenite-type zeolite catalyst having a controlled macropore structure, a catalyst composite including the mordenite-type zeolite catalyst, and a method for preparing the catalyst composite.

### [Disclosure]

### [Technical Problem]

As a result of continuous studies on relationships between particle uniformity and catalytic activities of a mordenite zeolite catalyst, it was confirmed that the catalytic activities increase as a particle size of the catalyst is more uniform. In this regard, the present invention provides a method for preparing a mordenite zeolite catalyst having excellent particle uniformity and a catalyst obtained thereby.

### [Technical Solution]

The present invention relates to a method for preparing a mordenite zeolite including: dissolving a pH-adjusting material and a silica precursor in water to provide a basic silica suspension; dissolving a structure-directing agent and an alumina precursor in water to provide an alumina aqueous solution; dissolving a surfactant in water to provide an surfactant aqueous solution; mixing and stirring the basic silica suspension and the alumina aqueous solution to prepare a silica-alumina aqueous solution; adding the surfactant aqueous solution to the silica-alumina aqueous solution to prepare a zeolite synthesis composition; gelating the zeolite synthesis composition; and crystallizing.

The basic silica suspension may be obtained by adding the pH-adjusting material to water to prepare a basic aqueous solution, and adding and dissolving the silica precursor to the basic aqueous solution.

The pH-adjusting material may be added in an amount such that a pH of the basic aqueous solution falls within the range of 12 or more.

The pH-adjusting material may be added in an amount such that a molar ratio to SiO₂ is 0.15 to 0.35.

The pH-adjusting material may be at least one selected from the group consisting of lithium hydroxide, sodium hydroxide, potassium hydroxide, rubidium hydroxide, cesium hydroxide and ammonium hydroxide.

The basic silica suspension may contain silica such that a number of moles thereof is 0.01 to 0.1 to a number of moles of water in the entire zeolite synthesis composition.

The silica precursor may be added at a speed of 0.1 g/min to 1 g/min while stirring.

The silica precursor may be at least one selected from the group consisting of fumed silica, precipitated silica, colloidal silica, sodium silicate, tetramethyl o-silicate, tetraethyl o-silicate, borosilicate and fluorosilicate.

The silica precursor may be dissolved by stirring for 1 hour to 200 hours after adding the silica precursor.

The alumina aqueous solution may be prepared by adding the structure-directing agent and the alumina precursor to water and stirring the same.

The structure-directing agent and the alumina precursor may be independently or simultaneously added to water at a speed of 1 g/min to 10 g/min.

The alumina precursor may be added in an amount such that a molar ratio of silica to alumina (SiO₂/Al₂O₃) falls within the range of 5 to 50.

The alumina precursor may be at least one selected from the group consisting of sodium aluminate, sodium aluminum sulfate and aluminum.

The structure-directing agent may be added in an amount to fall within the range of 1/100 mol to 1/10 mol to 1 mol of silica.

The structure-directing agent may be at least one selected from the group consisting of tetramethyl ammonium bromide, tetramethyl ammonium chloride, tetramethyl ammonium hydroxide, tetraethyl ammonium bromide, tetraethyl ammonium chloride, tetraethyl ammonium hydroxide and tetraethyl ammonium tetrafluoroborate.

The surfactant aqueous solution may be prepared by adding the surfactant to water at a temperature of 20°C to 80°C while stirring.

The surfactant may be added such that a molar concentration thereof is 0.01 to 0.1 in the surfactant aqueous solution.

The surfactant may be at least one selected from the group consisting of cetyltrimethylammonium bromide, cetyltrimethylammonium chloride and cetylpyridinium chloride.

The mixing may be carried out by adding the alumina aqueous solution to the basic silica suspension at a speed of 1 cc/min to 10 cc/min.

The mixing may involve additional stirring for 1 hour to 72 hours after the alumina aqueous solution is added.

The zeolite synthesis composition may be prepared by adding the surfactant aqueous solution to the silica-alumina aqueous solution at a speed of 1 cc/min to 10 cc/min

The gelating may be carried out by stirring at a temperature of 20°C to 60°C for 1 hour to 120 hours.

The crystallizing may be carried out by reacting at a temperature of 140°C to 210°C.

The crystallizing may be carried out in a presence of a seed.

According to another aspect of the present invention, a mordenite zeolite having excellent uniformity is provided, wherein the mordenite zeonite is secondary particles formed by agglomeration of the primary particles having a micropore, the secondary particle comprises an interparticle mesopore, and the secondary particles contain 90% or more of the primary particles having particle size within the range of a most-distributed primary particle size in unit of 10 nm ± 30 nm when measuring particles size for a total of the 100 primary particles by randomly selecting 10 primary particles from each of the 10 SEM images taken with an acceleration voltage of 5.0 kV and 50,000 magnification.

### [Advantageous Effects]

According to the present disclosure, a mordenite zeolite having excellent particle size uniformity can be prepared. Further, mordenite zeolites having various ranges of particle sizes while maintaining such uniformity can be prepared.

Catalytic activities can be improved using a catalyst prepared using the mordenite zeolite having a uniform particle size provided by the present invention.

### [Description of Drawings]

FIG. 1 is a SEM image of a sample of a mordenite zeolite obtained in Example 1 taken at an indicated magnification.
FIGS. 2 to 4 are SEM images of the sample of the mordenite zeolite obtained in Example 1 taken at a magnification of 50,000, illustrating a result of measuring particle sizes of 10 randomly selected particles of each image.
FIG. 5 is a SEM image of a sample of a mordenite zeolite obtained in Comparative Example 3 taken at an indicated magnification.
FIGS. 6 to 8 are SEM images of the sample of the mordenite zeolite obtained in Comparative Example 1 taken at a magnification of 50,000, illustrating a result of measuring particle sizes of 10 randomly selected particles of each image.
FIG. 9 is a graph illustrating a size distribution in units of 10 µm based on particle sizes measured from FIGS. 2 to 4 and 6 to 8.
FIG. 10 is a diagram illustrating a result of a catalytic activity test using a catalyst prepared with the mordenite zeolite obtained from Example 1 and Comparative Examples 1 and 2.
FIG. 11 is a SEM image of a sample of a mordenite zeolite obtained in Comparative Example 2 at an indicated magnification.
FIG. 12 is a SEM image of a sample of a mordenite zeolite obtained in Comparative Example 2 at a magnification of 50,000.
FIG. 13 is a graph illustrating a result of FT-IR analysis obtained by analyzing acid sites through an in-situ pyridine adsorption experiment on the mordenite zeolite obtained in Example 1 and Comparative Examples 1 and 2.
FIG. 14 is a SEM image of a sample of the mordenite zeolite obtained in Examples 2 to 4 at a magnification of 50,000, illustrating together with the SEM image of the sample of Example 1.
FIG. 15 is an SEM image of the sample of the mordenite zeolite obtained in Examples 5 to 7 taken at a magnification of 50,000.

### [Best Mode]

The present invention relates to a mordenite zeolite and a method for manufacturing the same. More specifically, the present invention is to provide a method for manufacturing a mordenite zeolite having excellent particle uniformity.

The present inventors have confirmed that in terms of separately preparing and mixing a basic silica suspension, in which a silica precursor is dissolved, and an alumina aqueous solution, in which a structure-directing agent and an alumina precursor are dissolved, mordenite zeolites can be formed to have a uniform particle size by controlling mixing conditions, thereby completing the present invention.

First, a basic silica suspension in which a silica precursor is dissolved is prepared. The basic silica suspension refers to a mixed solution in which the silica precursor is dispersed in a basic aqueous solution.

To prepare the basic silica suspension, a basic aqueous solution is first prepared by adding a pH-adjusting material, which is basic, to water to increase pH. The silica precursor may not dissolve well in a low-pH solution. In this regard, it is preferable that in order to improve dissolution of the silica precursor, a basic pH-adjusting material be added as the above to prepare a basic aqueous solution. In addition, the added pH-adjusting material may also serve to induce crystallization zeolite during crystallization by providing cations to a zeolite synthesis composition solution.

Accordingly, when the basic pH-adjusting material is not included in the solution, the silica precursor may not dissolve well due to a low pH, and an amount of the cations in the solution. This may result in a reduced final yield of zeolite and low crystallization.

To improve solubility of the silica precursor and provide a sufficient amount of cations for the formation of crystals as described above, it is preferable to add the pH-adjusting material such that the pH of the basic aqueous solution falls within the range of 12 or more, specifically, within the range of 12 to 14. When the pH of the basic aqueous solution is lower than 12, the silica precursor may not dissociate well in the basic aqueous solution and may not participate in reactions. This may result in that the silica precursor is formed as crystals during the crystallization and may act as an impurity in a sample. The basic silica suspension having the above pH range can be obtained by adding the pH-adjusting material at a molar ratio or 0.15 to 0.35 to 1 mol of SiO2.

Although not limited, the pH-adjusting material may be, for example, lithium hydroxide, sodium hydroxide, potassium hydroxide, rubidium hydroxide, cesium hydroxide, ammonium hydroxide, and the like. Any one of the listed pH-adjusting material or a combination of two or more thereof may be used.

The basic silica suspension of the present invention contains the silica precursor. The silica precursor may be added to and dispersed in the basic aqueous solution obtained by adding and dispersing the pH-adjusting material to water, thereby preparing the basic silica suspension. That is, the basic silica suspension may be obtained by adding the silica precursor to the basic aqueous solution and stirring until the silica precursor is completely dissolved. In this manner, uniform dispersity of the silica precursor can be secured in the basic aqueous solution, and further, a zeolite having high uniformity can be prepared.

When adding the silica precursor to the basic aqueous solution, it is preferable that the silica precursor be gradually added to the silica precursor. The silica precursor begins to dissolve as soon as the silica precursor is added to the basic aqueous solution. When added in a large amount at once, the silica precursor aggregates and dissolves at a non-uniform speed, resulting in increased viscosity of the solution. Furthermore, as the viscosity of the solution increases, a physical stirring speed decreases, and a secondary non-uniform dissolution caused by the decreased stirring speed may occur. As the above process is being repeated, it may be difficult to completely dissolve the silica precursor in the basic aqueous solution and may require a longer time to form a solution in which the silica precursor is uniformly dispersed.

In light of the above, when the silica precursor is added to the basic aqueous solution, the silica precursor is gradually added preferably at a speed of 0.1 g/min to 1 g/min, more preferably at a speed of 0.3 g/min to 0.8 g/min.

It is preferable that the silica precursor be added such that a molar ratio of silica to water, that is, a silica-to-water mole ratio, in an entire composition falls within the range of 0.01 to 0.1. The silica-to-water mole ratio is preferably 0.03 to 0.08, and most preferably 0.05 to 0.07. When the silica-to-water mole ratio, a factor for adjusting the uniformity and viscosity of a basic silica suspension, satisfies the above-mentioned range, formation of zeolite crystals having a crystal size within a certain range may be induced, thereby improving uniformity of crystals.

Any silica precursor conventionally used in preparation of zeolites may be suitably used in the present invention. Although not particularly limited, the silica precursor may be one or more selected from fumed silica, precipitated silica, colloidal silica, sodium silicate, tetramethyl ortho silicate, tetraethyl ortho silicate, borosilicate, and fluorosilicate. As the silica precursor, silica in a dissolved state such as Ludox silica may be used; however, precipitated silica may more preferably be used as the silica precursor in terms of ease of reaction speed control and economic feasibility.

Although it has been described that the basic silica suspension is prepared by adding the silica precursor to the basic aqueous solution to which the pH-adjusting material is added, the basic silica suspension may be prepared by adding the silica precursor together with the pH-adjusting material. Also, the basic silica suspension may be prepared by adding the silica precursor after the pH-adjusting material is added, that is, before the pH-adjusting material is completely dissolved, and dissolving the silica precursor while changing the pH of the solution to be basic.

A method for adding the pH-adjusting material and the silica precursor to water may be the same as that for adding the silica precursor to the basic aqueous solution, and thus, a detailed description thereof will be omitted.

In the process of adding the silica precursor and the pH-adjusting material, it is preferable to add the silica precursor and the pH-adjusting material while stirring for dissolution thereof in water. The stirring may be performed at a speed of, for example, 100 rpm to 800 rpm. When the stirring speed is too low, the solution may not be mixed well, thereby reducing dispersion uniformity in the solution. In contrast, when the stirring speed is too high, the solution may splatter. In this regard, it is preferable that the stirring speed be within the above-mentioned range.

Furthermore, even after the silica precursor and the pH-adjusting material are added, it is preferable to maintain the stirring speed within the above-mentioned range for complete dissolution of the silica precursor and the pH-adjusting material.

In this case, additional stirring may change depending on usage amounts of the silica precursor and the pH-adjusting material, but is preferable to be performed until the silica precursor and the pH-adjusting material are completely dissolved. For example, the stirring may be performed for 1 hour or longer at a stirring speed of 100 rpm to 800 rpm. When the stirring time is too short, the silica precursor may not be well dissociated, thereby reducing the uniformity of the solution. In contrast, a longer stirring time is preferable in terms of solution uniformity improvement. However, when the stirring time is too long, commercial and economic feasibility may decrease. More preferably, the stirring may be carried out for 120 hours or less.

Next, the alumina aqueous solution in which the alumina precursor and the structure-directing agent are dissolved is prepared.

Any alumina precursor conventionally used in preparation of a zeolite may be suitably used in the present invention. For example, the alumina precursor may be selected from the group consisting of sodium aluminate, sodium aluminum sulfate, and aluminum. Any one of the listed alumina precursors or a combination of two or more thereof may be used.

A usage amount of the alumina precursor may be determined according to a silica-to-alumina mole ratio of a zeolite to be obtained. For example, although not limited, the alumina precursor may be used such that the silica-to-alumina mole ratio (SiO₂/Al₂O₃ mole ratio) may be within the range of 5 to 50.

Meanwhile, any structure-directing agent which may be used in synthesis of a mordenite zeolite may be suitably used in the present invention. For example, the structure-directing agent may be tetramethyl ammonium bromide, tetramethyl ammonium chloride, tetramethyl ammonium hydroxide, tetraethyl ammonium bromide, tetraethyl ammonium chloride, tetraethyl ammonium hydroxide, and tetraethyl ammonium tetrafluoroborate. Any one of the listed structure-directing agents or a combination of two or more thereof may be used.

In the solution for synthesizing desired zeolite crystals, the degree of crystallinity is determined according to a concentration of the structure-directing agent, and sizes of the crystals vary depending on the amount of the structure-directing agent. Therefore, the usage amount of the structure-directing agent may be determined according to the degree of crystallinity and crystal size of a zeolite to be obtained. However, if the structure-directing agent is used in an excessively small amount, crystals may not be formed. In this regard, although not limited, it is more preferable that the structure-directing agent be used in an amount of 1/100 mol or more based on 1 mol of silica. An upper limit of the usage amount of the structure-directing agent can be adjusted by the size of crystals. Although not particularly limited, it is preferable that the usage amount of structure-directing agent be 1/10 or less for economic feasibility and highpurity crystals.

The alumina precursor and the structure-directing agent are dissolved in water to prepare an alumina aqueous solution. The alumina precursor and the structure-directing agent are added to water and stirred until they are completely dissolved in water, to obtain an alumina aqueous solution. The alumina precursor and the alumina aqueous solution are completely dissolved in water, to obtain a uniformly dispersed alumina aqueous solution. Therefore, particle size uniformity of the zeolite can be secured.

In order to prepare such a uniformly dispersed alumina aqueous solution, it is preferable to gradually add the alumina precursor and the structure-directing agent to water. In this case, the alumina precursor and the structure-directing agent may be simultaneously added, or one of the alumina precursor and the structure-directing agent may be first added and the other may be added consecutively or after a certain time interval. More specifically, the alumina precursor and the structure-directing agent may be added at a speed of 1 g/min to 10 g/min.

In the process of adding the alumina precursor and the structure-directing agent, it is preferable that stirring be performed simultaneously as the alumina precursor and the structure-directing agent are dissolved in water. In this case, the same conditions as those in preparation of the basic silica suspension can be applied to the stirring.

Furthermore, even after the alumina precursor and structure-directing agent are added, it is preferable to continue the stirring for complete dissolution of the alumina precursor and structure-directing agent. The stirring after the addition may be changed depending on usage amounts of the alumina precursor and the structure-directing agent; however, it is preferable that the stirring be performed during complete dissolution of the silica precursor and the structure-directing agent for, for example, 15 min to 1 hour. When observed with naked eye, the stirring may be terminated when a clear aqueous solution in which non-dissolved substances are not observed is obtained. For example, a clear aqueous solution may be observed in about 1 hour.

An surfactant aqueous solution in which the surfactant is dissolved is then prepared.

The surfactant may induce mesopores by forming micelles between mordenite particles having micropores formed by the structure-directing agent, or by being attached to surface of the mordenite particles in the form of ionic binding to increase an interparticle space. Examples of the surfactant may be cetyltrimethylammonium bromide, cetyltrimethylammonium chloride, cetylpyridinium chloride, and the like. Any one of the listed surfactants or a combination of two or more thereof may be used.

The surfactant may also be prepared as an aqueous solution in which the surfactant is dissolved. A solutiontype surfactant may be diluted with water and stirred to be uniformly dispersed in water. A powder-type surfactant may be stirred to be a uniform solution in the form of an aqueous solution. In this case, it is preferable that a concentration the surfactant be within the range of 0.01 mol to 0.1 mol.

It may be preferable to perform the stirring at a constant temperature at a predetermined time to uniformly disperse the surfactant in water. Specifically, in terms of stirring the surfactant in water, the surfactant may be diluted or dissolved within the temperature range of room temperature (20°C) to 80°C. In this case, the stirring may be performed for 10 minutes to 24 hours at a stirring speed of 30 rpm to 500 rpm.

Although the solubility in water varies depending on the surfactant, it is preferable to perform stirring while applying heat in a temperature range of room temperature to 80°C, and in this case, a uniform surfactant aqueous solution can be obtained. In this regard, the temperature may be more preferably 20°C to 100°C, and most preferably 30°C to 80°C.

Meanwhile, if the stirring speed is too low, the stirring time may excessively increase, and if the stirring speed is too high, uniformity of the particle size may be reduced due to bubble formation caused by the surfactant when added to gel. Therefore, the stirring speed may be 30 rpm to 500 rpm. In this regard, the stirring speed may be preferably 50 rpm to 450 rpm, more preferably 100 rpm to 400 rpm, most preferably 200 rpm to 400 rpm.

Furthermore, there may be a difference in the stirring time depending on the solubility and treatment temperature of the surfactant. However, the stirring may be carried out for 10 min to 24 hours as described above so as to form a uniformly dispersed state. For example, the stirring time may be for 1 hour to 24 hours, 3 hours to 20 hours, 5 hours to 20 hours, 7 hours to 15 hours, or the like.

Thus-prepared basic silica suspension, alumina aqueous solution and surfactant aqueous solution are mixed. In this case, the silica, the alumina, the pH-adjusting material, the structure-directing agent and the surfactant need to be uniformly dispersed in the zeolite synthesis composition so as to prepare a zeolite having high particle size uniformity.

To this end, it is preferable in the present invention that one of the basic silica suspension and the alumina aqueous solution be gradually added to the other while stirring.

Although an order of addition is not particularly limited, a solution having relatively low viscosity is gradually added to a solution having relatively high viscosity to increase the particle size uniformity while gradually reducing the viscosity of the entire solution. In this regard, it is preferable that the alumina aqueous solution or the surfactant aqueous solution having relatively low viscosity be added dropwise to the basic silica suspension having relatively high viscosity to prepare a silica-alumina aqueous solution. In addition, it is preferable that the surfactant aqueous solution is added dropwise to the silica-alumina aqueous solution prepared by adding the surfactant aqueous solution to the basic silica suspension. In this case, a sample having an overall constant silica/alumina ratio can be uniformly obtained.

The alumina aqueous solution may be added to the basic silica suspension, for example, dropwise. More specifically, the alumina aqueous solution may be added at a speed of 10 cc/min or less. As it is preferable to gradually add the alumina aqueous solution in terms of securing uniform dispersity, a lower limit of the adding speed is not particularly limited; however, in terms of productivity, it is preferable to add at a speed of 1.0 cc/min or more. More preferably, the alumina aqueous solution is added to the basic silica suspension at a speed of 1.0 cc/min to 7 cc/min, even more preferably 2.0 cc/min to 4.5 cc/min.

The silica-alumina aqueous solution may be obtained by performing the mixing as described above. If necessary, the silica-alumina aqueous solution may be additionally stirred. The additional stirring is for more uniform dispersion of the zeolite synthesis composition and may be performed for 1 hour or more, and specifically for 1 hour to 72 hours. For example, the additional stirring may be performed for 2 hours to 60 hours, 2 hours to 48 hours, 3 hours to 48 hours, 3 hours to 36 hours, or the like.

The surfactant aqueous solution may be added to the silica-alumina aqueous solution prepared as described above. It is preferable that the surfactant aqueous solution be slowly added for uniform dispersion. Although not particularly limited, the surfactant aqueous solution may be added at a speed range of 10 cc/min or less, for example, 1 cc/min to 8 cc/min, 2 cc/min to 7 cc/min, 3 cc/min to 5 cc/min, or the like.

This results in obtaining a uniformly dispersed zeolite synthesis composition. By gelating and crystallizing the obtained zeolite synthesis composition, the mordenite zeolite having a uniform particle size may be obtained.

The zeolite synthesis composition is gelated. The gelating may be performed for 1 hour or more. The gelating may be performed within the range of 1 hour to 120 hours at a room temperature (20°C) to 60°C. The gelating is performed while stirring the composition under the above-mentioned temperature range and time conditions. In this case, the stirring speed may be determined to be a condition in which bubbles are not generated depending on a type of the surfactant. The stirring may be carried out generally within the range of 50 rpm to 1000 rpm. A stirring speed exceeding the above-mentioned range results in the formation of bubbles and thus increases non-uniformity in the gel.

A zeolite crystal can be prepared by allowing the gelated zeolite synthesis composition to react at a temperature of 140°C to 210°C, preferably 150°C to 190°C. The gelating temperature affects a crystallization speed and a crystal size. A high crystallization temperature induces a reduction in the crystallization speed and an increase in the crystal size. In consideration thereof, the crystallization temperature can be determined.

Meanwhile, although not necessarily limited, the crystallization may be carried out for 24 hours or more, for example, 24 hours to 100 hours, 48 hours to 96 hours or 48 hours to 84 hours.

According to the method of the present invention described above, raw materials are prepared in advance in the form of aqueous solutions, and the aqueous solutions are gradually mixed to obtain the zeolite synthesis composition in which the raw materials are uniformly dispersed. Such compositions are used to prepare a mordenite zeolite crystal, thereby obtaining a zeolite having a uniform crystal size. That is, according to the method of the present invention, not only a crystal size of a primary particle of the mordenite zeolite is uniform, but also a crystal size of a secondary particle formed by using the surfactant is uniform.

Meanwhile, in the present invention, the surfactant may be further included in addition to the structure-directing agent. Mesopores can be formed between mordenite crystals by allowing a mordenite structure having micropores formed by the structure-directing agent to form larger micelles around the surfactant. As a result, the secondary particles formed by agglomeration of the primary particles have the micropores formed in the primary particles and the mesopores between particles at the same time, and thus a hierarchical mordenite zeolite may be obtained.

In addition, in the present invention, mordenite seeds may further be added. Although not particularly limited, such mordenite seeds can be added in the process of preparing the surfactant aqueous solution or in the process of adding the surfactant aqueous solution to the silica-alumina aqueous solution. Further, the seeds may be added in the gelating process.

In addition, a catalyst may be prepared by adding one or more binding agents selected from alumina, silica, silica-alumina and/or precursors thereof to the mordenite zeolite. The catalyst according to the present invention may be appropriate for conversion of aromatic hydrocarbons.

The catalyst may further include one or more zeolites selected from BEA, EUO, FAU, FER, MEL, MFI, MFS, MOR, MTT, MTW, and TON. In particular, in the case of adding BEA, FAU, MFI, or the like, the zeolite induces cracking, or the like, and thus, cracking of olefin produced during a catalytic reaction is induced and a deposition of carbonic materials in the catalyst is prevented, thereby increasing a lifespan of the catalyst.

Additionally, the catalyst may further include a metal component having one or more elements selected from transition metals and noble metals. The transition metal may be one or more selected from the group consisting of elements belonging to groups VI to XIV of the periodic table, and the noble metal may be one or more selected from the group consisting of elements belonging to groups VIII to XI of the periodic table. Preferably, the metal component may be one or more selected from the group consisting of rhenium, nickel, molybdenum, platinum and tin.

As the primary particles and the secondary particles of the zeolite obtained according to the present invention have excellent uniformity, and may thus can obtain a catalytic activity equivalently excellent to the case in which zeolites having a smaller average particle size are used, when used as a catalyst. The catalytic activity may thus be improved.

Such result has conventionally been considered that a small average particle size of the zeolite may serve to an increased diffusion speed and thus has a high catalytic activity. Accordingly, particle size control has been recognized as an important factor for diffusion rate control. However, the present invention has shown that catalytic activity can be improved by increasing crystal size uniformity rather than controlling the average particle size.

### [Mode for Invention]

Hereinafter, the present invention will be described in more detail. The following examples are for illustrative purposes only and are not intended to limit the scope of the present invention.

**Example 1**

After completely dissolving 2.67 g of NaOH in 60 mL of water (pH: about 13), 17.96 g of precipitated silica was slowly added to the solution over 30 minutes. During the addition, stirring was performed at 500 rpm, and after the addition, the mixture was further stirred at the same speed for 1 hour so as to completely dissolve the precipitated silica and NaOH. As a result, a basic silica suspension was prepared.

2.12 g of sodium aluminate, and 1.85 g of tetraethylammonium bromide (TEABr) as a structure-directing agent were slowly added to 20 mL of water over 2 minutes. During the addition, stirring was performed at 200 rpm, and after the addition, the mixture was further stirred at the same speed for 30 minutes so as to completely dissolve the sodium aluminate and the structure-directing agent. As a result, an alumina aqueous solution was prepared.

4.2 g of cetyl trimethylammonium chloride (CTAC) was added to 14 mL of water at room temperature (25°C). During the addition, stirring was performed at 300 rpm, and after the addition, the mixture was further stirred for 3 hours to completely dilute the CTAC. As a result, an surfactant aqueous solution was prepared.

While stirring the basic silica suspension, the alumina aqueous solution was added dropwise to the basic silica suspension for 10 minutes. After the addition, stirring was further performed for 3 hours to prepare a silica-alumina aqueous solution.

The surfactant aqueous solution was added dropwise to the silica-alumina aqueous solution for 5 minutes to prepare a mordenite zeolite synthesis composition.

The obtained mordenite zeolite synthesis composition was gelated at a temperature of 30°C for 2 hours to prepare a gelated product.

The gelated product was then put in a synthesis vessel and allowed to react in an oven at a temperature of 180°C for 72 hours so as to induce crystallization and thus to form mordenite crystals.

Upon completion of the crystallization, the synthesis vessel was taken out of the oven, forcibly cooled with tap water, filtered, and washed with 2L of water to obtain a filtrate.

After washing, the filtrate was put in the oven and dried at 60°C for 12 hours or longer to obtain a sample.

The obtained sample was heated to a 1°C increase per minute, dried at 110°C for 2 hours, and then calcined at 550°C for 5 hours to obtain a Na-form mordenite crystal sample.

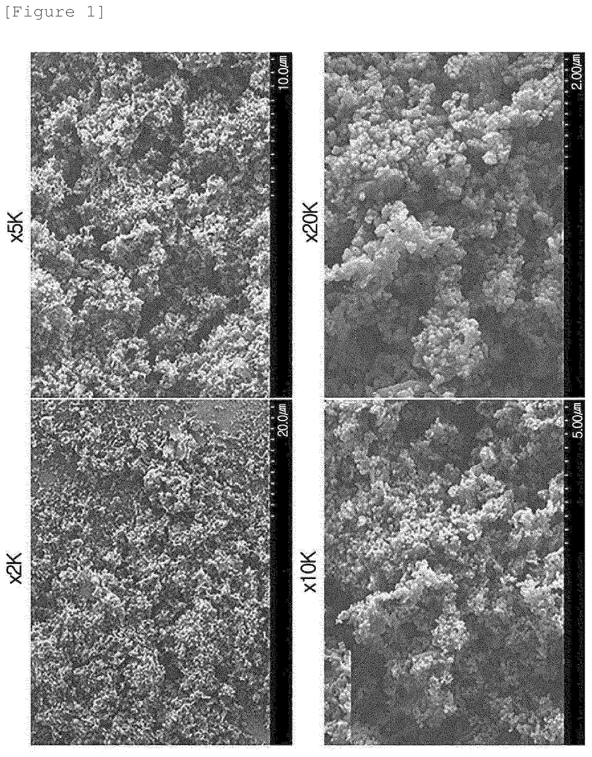

The sample was collected and SEM-photographed at predetermined magnifications (1k, 5k, 10k and 20k). A result thereof is shown in FIG. 1.

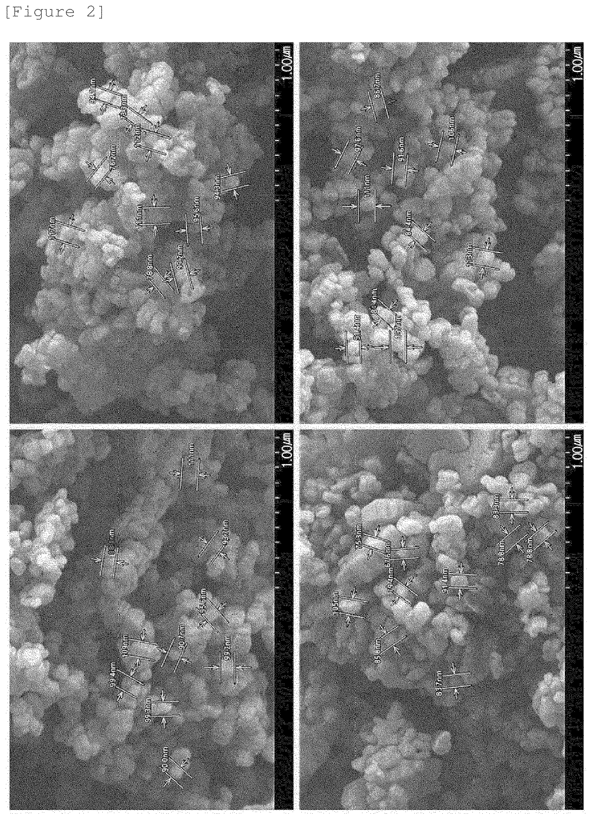

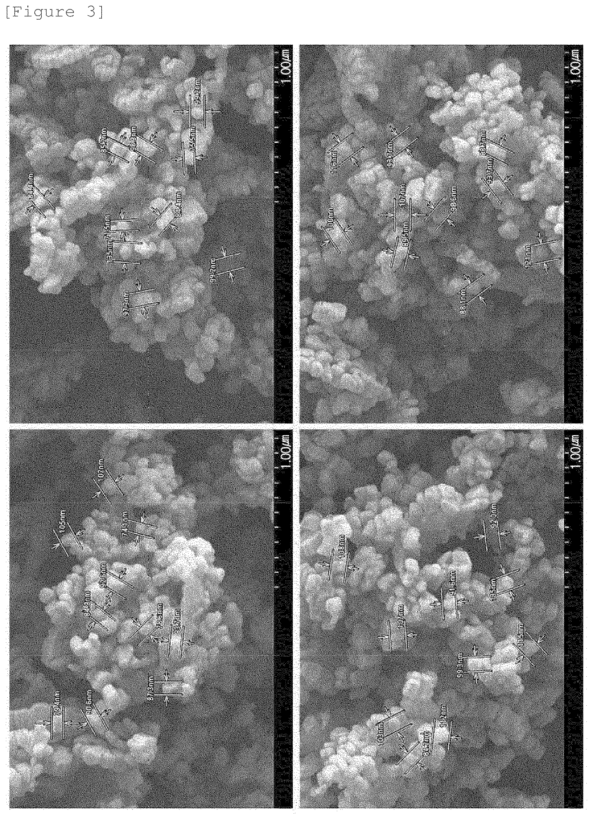

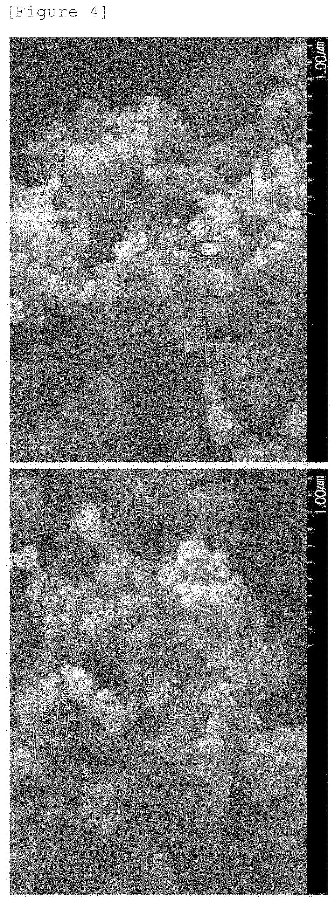

Further, 10 samples were collected for the prepared mordenite crystal, and SEM images were taken at a magnification of 50k for each sample, which are shown in FIGs. 2 to 4. 10 random particles were selected from the SEM images of FIGs. 2 to 4, and a size of each particle was measured. A result thereof is shown together.

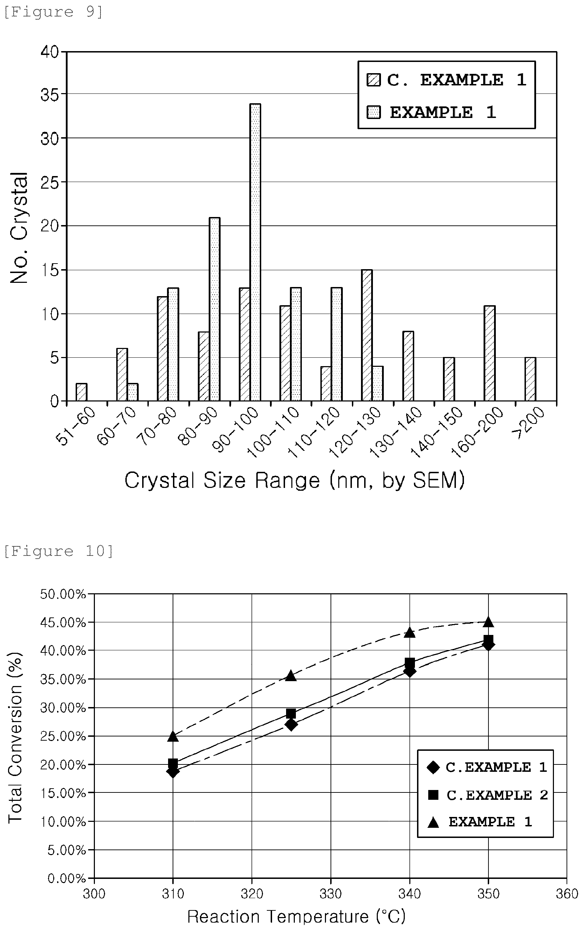

In addition, a number of the measured particles was determined in units of 10 nm, and a result thereof is shown in FIG. 9.

**Comparative Example 1**

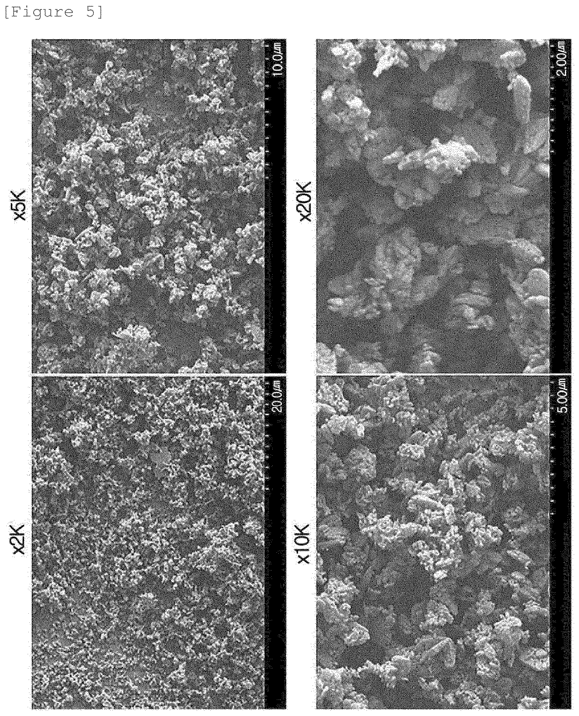

A zeolite of the product name CBV21A commercially available from Zeolyst (a silica/alumina ratio of 20, provided in the form of ammonium and a specific surface area of 500 m²/g) was SEM-photographed at predetermined magnifications (1k, 5k, 10k and 20k). A result is shown in FIG. 5.

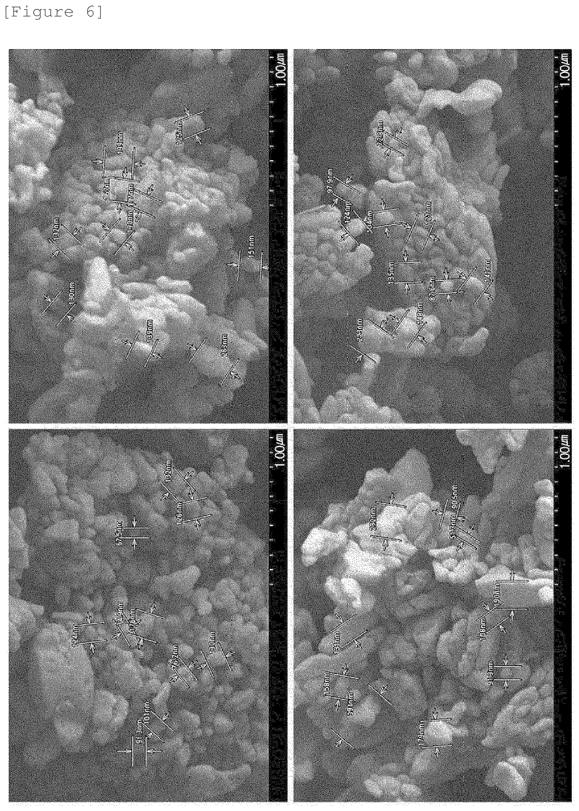

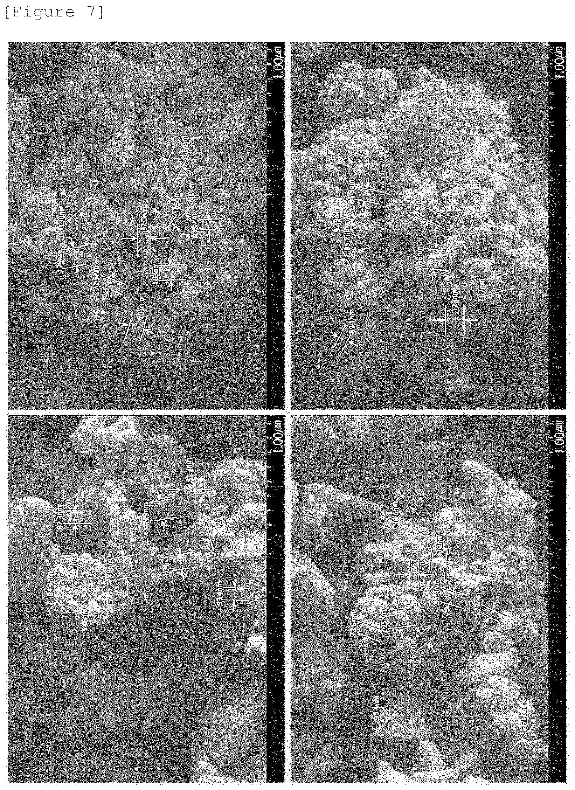

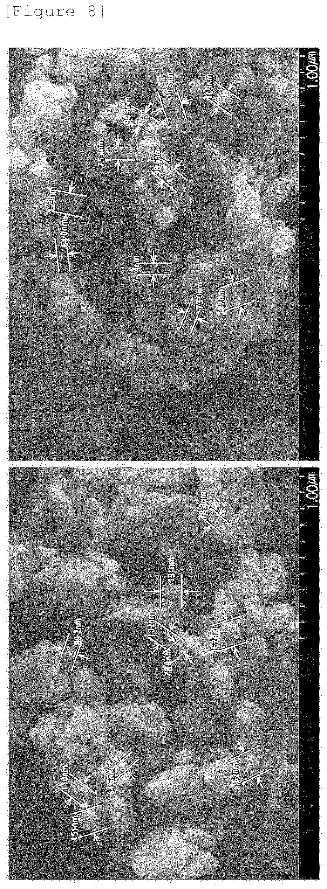

Further, 10 samples were collected for a prepared mordenite crystal, and a SEM image was taken at a magnification of 50k for each sample, which are shown in FIGS. 6 to 8. 10 particles were randomly selected from each SEM photograph of FIGS. 6 to 8, and a size of each particle was measured. A result is shown together.

Furthermore, a number of the measured particles was determined in units of 10 nm, and a result is shown in FIG. 9.

**Particle Uniformity Evaluation**

As shown in FIG. 9, it can be seen that in the mordenite zeolite prepared in Example 1, crystals having a particle size of 90 nm to 100 nm are distributed in a largest portion. In addition, crystals having a particle size within the range of ±30 nm are present. Meanwhile, crystals having a particle size in the range of 60 nm to 200 nm are distributed without superiority in a mordenite zeolite of Comparative Example, leading to low particle uniformity.

This indicates that according to the method of the present invention, a mordenite zeolite having a higher particle uniformity can be prepared.

**Catalytic activity evaluation**

Catalytic activities were evaluated using an MOR catalyst in which the mordenite zeolites of Example 1, Comparative Example 1 and Comparative Example 2 are used.

The mordenite zeolite of Comparative Example 2 is a zeolite of the product name CP7176 commercially available from Zeolyst (a silica/aluminum ratio is 20, provided in the form of ammonium and a BET specific surface area of 540 m²/g).

The catalyst activities were evaluated at a speed of 3.33°C/min by increasing a temperature to 400°C, drying for 90 minutes under a 1% O₂/N₂ gas condition, followed by converting to H₂ gas at the same temperature and reducing for 120 min.

After the reduction was completed, the sample catalyst was cooled at a speed of 10°C/min and evaluated from 350°C.

The feed was mixed with toluene and Cg Aromatic in a mass ratio of 50:50 and used.

At this time, reactants were collected for each temperature, and component analysis was then performed through GC analysis.

Activity characteristics of each catalyst are shown in Table 1 below.

**[Table 1]**

| | Crystal Size (nm) (XRD) | SAR | Specific Surface Area (m²/g) | | Pore Volume (cm³/g) | Average Pore Size (Å) |
|---|---|---|---|---|---|---|
| | | | Total | Micropore Specific Surface Area | | |
| CE 1 | 82.3 | 22 | 587.4 | 587.2 | 0.28 | 18.9 |
| CE 2 | 73 | 21 | 540.7 | 506.2 | 0.3 | 22.1 |
| EX 1 | 105.4 | 20.3 | 588.4 | 571.6 | 0.36 | 24.7 |

| | | | | | | |
|---|---|---|---|---|---|---|
| *Ex: Example, **CE: Comparative Example | | | | | | |

Furthermore, an evaluation result of the catalytic activity for each catalyst is shown in FIG. 10. Based on FIG. 10, it can be seen that the catalyst of Example 1 exhibits a higher conversion rate even at the same reaction temperature in all sections of the reaction temperature, compared to the catalysts of Comparative Examples 1 and 2. As can be seen from Table 1 above, there is no significant difference in all physical property evaluation results except for the average crystal size and micropore surface area. In particular, Comparative Examples 1 and 2 exhibit relatively poor catalytic activities despite having smaller crystal sizes than those of the Example 1. This is a result different from the conventional knowledge that catalytic activities are excellent when the particle size of the catalyst is small. This is based on the fact that, by being produced by the method of the present invention, the particle size distribution of the zeolites used in the catalyst is uniform. When the particle size distribution of the mordenite zeolite is uniform, a better catalytic activity can be obtained even when the particle size is large.

**Acid Site Analysis**

Acid sites were analyzed through FT-IR analysis through an in-situ pyridine adsorption experiment.

25 mg of a H form of each sample of Example 1, Comparative Example 1 and Comparative Example 2 was made into a pellet.

The pellet was mounted on an In-situ Cell, and dried under vacuum at 500°C for 3 hours as a pretreatment process. 0.5 µL of pyridine was then injected.

While the injected pyridine was vaporized, it was allowed to pass through the pellet sample. At this time, an amount of pyridine adsorbed on the sample was analyzed and quantified by FT-IR.

Pyridine was used as an adsorbent for measuring a total amount of acid site, and 2,6-di-tert butyl pyridine (2,6-DTBPy) was used as an adsorbent for measuring an external amount of acid site. An internal amount of acid site was calculated as a difference between the total amount of acid site and the external amount of acid site. The external amount of acid site was measured by the same method used to measure the total amount of acid site except that only the adsorbent is changed.

**[Table 2]**

| | CE 1 | CE 2 | EX 1 |
|---|---|---|---|
| EXTERNAL ACID SITE AMOUNT | 128 | 148 | 134 |
| INTERNAL ACID SITE AMOUNT | 480 | 325 | 352 |
| TOTAL ACID SITE AMOUNT | 608 | 473 | 486 |

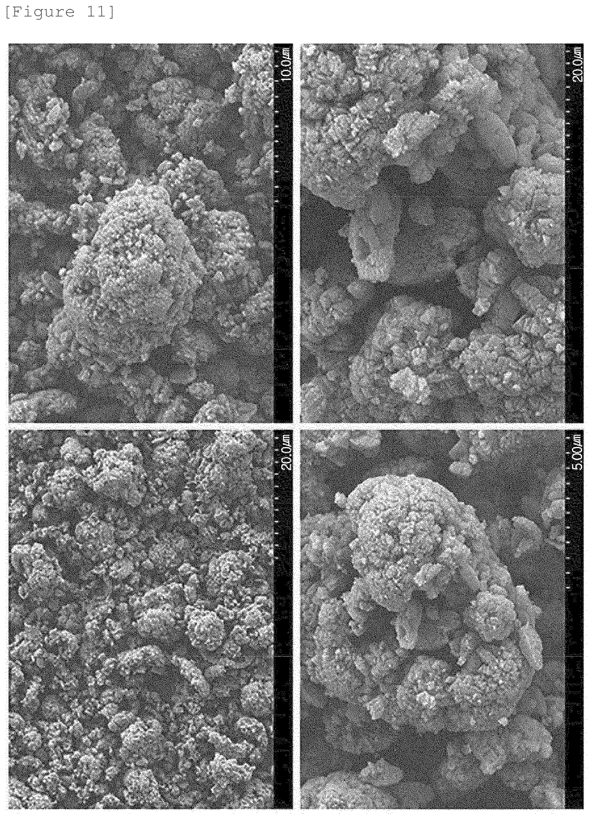

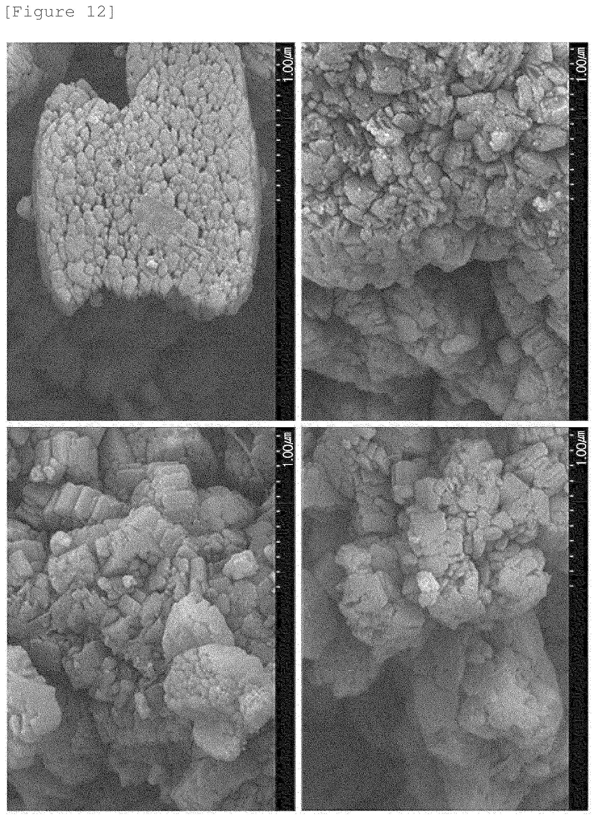

Based on the acid site analysis result shown in Table 2 above, when comparing Comparative Example 1 and Example 1, it can be seen that Example 1 exhibits better performance from the result of the catalytic activity evaluation of FIG 10 despite the small amount of acid site. This result indicates that the particle uniformity is more closely related to the catalytic activity than the effect of the amount of acid site. Meanwhile, despite a similar amount of acid site when compared to Example 1, Comparative Example 2 exhibits reduced catalytic activity based on the result of FIG. 10, which is considered that as shown in FIGS. 11 and 12, catalyst particles of Comparative Example 2 are not uniform and sizes thereof are not uniform. Based on such results, it can be confirmed that particle diffusion speed can be improved by improving uniformity of zeolites, and thus, the catalytic activities can be improved; however, changes in the physical properties of the zeolite do not contribute to increasing the catalytic activity.

**Ratio of octahedral framework** to **tetrahedral framework**

Through solid aluminum nuclear magnetic resonance analysis, ratios of tetrahedral structures and octahedral structures included in the samples of Example 1, Comparative Example 1 and Comparative Example 2 were measured.

The presence of the tetrahedral structure (Td) indicates that Al exists in a zeolite framework, and the presence of the octahedral structure (Od) indicates that Al is not in the skeleton, but in a pore.

The larger the amount of Al present in the skeleton, the greater the amount of effective Al which can act as an acid site, among Al contained in the sample, and it also means that purity of the sample is high.

Solid aluminum nuclear magnetic resonance analysis was performed by the following method.

Samples of Example 1, Comparative Example 1 and Comparative Example 2 were mixed uniformly while grinding in a mortar to prepare a measurement sample.

For each measurement sample, a 4 mm rotor was used at 600 MHz, and experiments were conducted under a 12 kHz spinning condition. 0.5 µs of pulse was given, and a delay time was set to 5 sec.

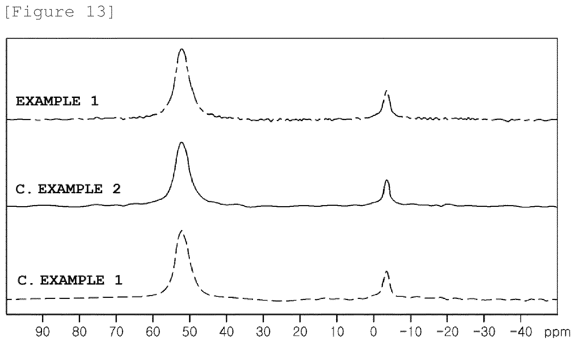

A result of the solid aluminum nuclear magnetic resonance analysis is shown in FIG. 13.

Among peaks obtained under the above conditions, a peak appeared at 53 ppm was considered as an aluminum tetrahedron (Td), and one at 0 ppm was considered as an aluminum octahedron (Oh) and were integrated.

The ratios of the tetrahedral structure and the octahedral structure were measured, and a result thereof is shown in Table 3.

[Table 3]

| | CE 1 | CE 2 | EX 1 |
|---|---|---|---|
| Oh/Td | 0.22 | 0.19 | 0.19 |

Based on Table 3, it can be seen that the purity of the sample increases as the ratio of Al (Oh) present in the pores or on the surface of the particles in the form of an oxide outside the framework to Al (Td) inside the framework is reduced, and the zeolite can be considered to have a well-controlled acid site. Therefore, as the Oh/Td ratio is lower, the zeolite has higher purity and a well-controlled acid site.

**Examples 2 to 4**

Using the same method and conditions as those of Example 1, a mordenite zeolite synthesis composition was prepared, and a gelated product was prepared.

The gelated product was put in a synthesis vessel and crystallized by allowing to react in an oven at temperatures of 160°C (Example 2), 170°C (Example 3) and 175°C (Example 4) for 72 hours to form mordenite crystals.

A size of the mordenite crystal obtained in each example was measured in the same manner as in Example 1, and a result thereof is shown in Table 4.

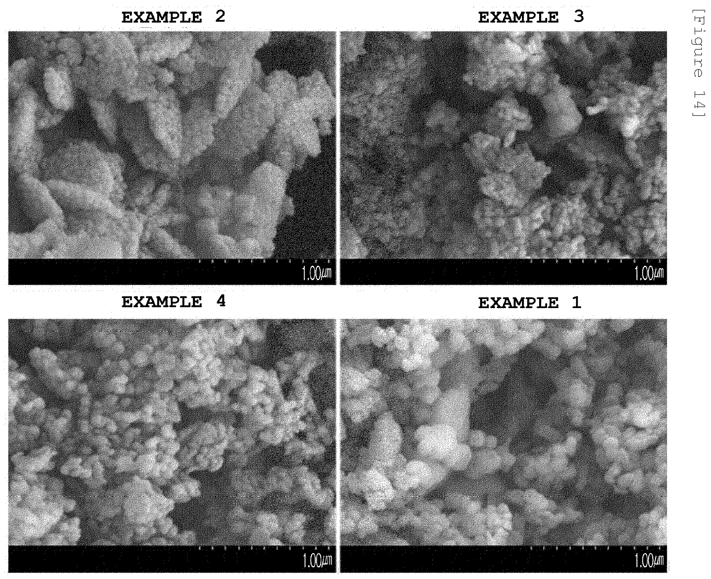

In addition, 10 samples were collected from the mordenite crystal obtained in each example, and a SEM image was taken at a magnification of 50k for each sample, which is shown in FIG. 14. The size of the mordenite crystal obtained in Example 1 is also shown in FIG. 14.

[Table 4]

| EX No. | EX 2 | EX 3 | EX 4 | EX 1 |
|---|---|---|---|---|
| CRYSTAL SIZE (nm) | 59 | 60 | 81 | 105.4 |

Based on the results of Examples 2 to 4, it was confirmed that the uniformity of the particles was maintained under the same process conditions and synthesis parameters even when the crystallization temperature was changed. Meanwhile, as shown in Table 4 and FIG. 14, as the crystallization temperature increases, the crystal size of the mordenite zeolite tends to increase. In addition, the crystal sizes dramatically increased at the crystallization temperatures of 175°C (Example 4) and 180°C (Example 1). This is because the crystallization occurs faster as the crystallization temperature increases, so that crystals grow faster to form large crystals. It can be seen based on such results that a mordenite zeolite having a uniform crystal size can be obtained by the method according to the present invention, and the crystal size can be controlled by controlling the crystallization temperature.

**Examples 5 to 7**

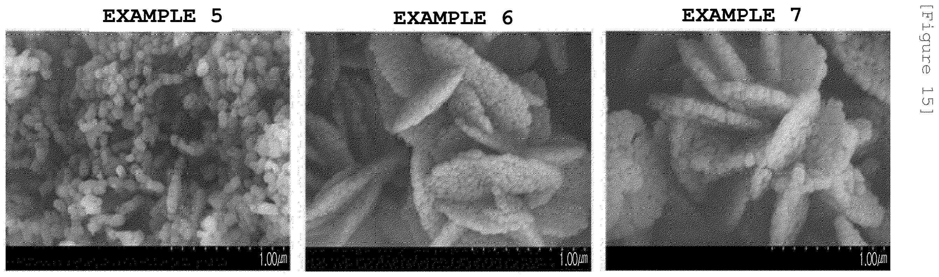

Mordenite crystals were formed in the same manner as in Example 1, except that the amounts of the structure-directing agents (TEABr) were adjusted as in Examples 5 to 7 in Table 5 below. Further, the mordenite crystals obtained in Examples 5 to 7 were SEM-photographed at a magnification of 50k and are shown in FIG. 15.

[Table 5]

| | EX 1 | EX 5 | EX 6 | EX 7 |
|---|---|---|---|---|
| TEABr USAGE AMOUNT(g) | 1.85 | 2.31 | 3.47 | 4.62 |
| CRYSTAL SIZE (nm) | 105 | 66 | 56 | 44 |

Based on the results of Examples 1 and 5 to 7, it was confirmed that uniformity of particles is maintained under the same process conditions and synthesis parameters even when the amounts of the structure-directing agent varied. Meanwhile, as shown in Table 5, only the size of the crystals varies depending on the usage amount of the structure-directing agent. The larger the amount of the structure-directing agent is used, the faster the seed is formed, thereby increasing the usage amount of smaller particles. This may result in that even when the crystallization is carried out at the same temperature, individual crystallization of the smaller particles is simultaneously performed, thereby leading to formation of several small crystals. Therefore, it can be seen based on the above result that a mordenite zeolite having a uniform crystal size can be obtained by the method according to the present invention, and the crystal size can be controlled by controlling the usage amount of the structure-directing agent.

## Claims

1. A method for preparing a mordenite zeolite, comprising:
dissolving a pH-adjusting material and a silica precursor in water to provide a basic silica suspension;
dissolving a structure-directing agent and an alumina precursor in water to provide an alumina aqueous solution;
dissolving a surfactant in water to provide an surfactant aqueous solution;
mixing and stirring the basic silica suspension and the alumina aqueous solution to prepare a silica-alumina aqueous solution;
adding the surfactant aqueous solution to the silica-alumina aqueous solution to prepare a zeolite synthesis composition;
gelating the zeolite synthesis composition; and
crystallizing.

2. The method of claim 1, wherein the basic silica suspension is obtained by adding the pH-adjusting material to water to prepare a basic aqueous solution and adding the silica precursor to the basic aqueous solution.

3. The method of claim 2, wherein the pH-adjusting material is added in an amount such that a pH of the basic aqueous solution falls within the range of 12 to 14.

4. The method of claim 2, wherein the pH-adjusting material is added in an amount such that a molar ratio to SiO2 is 0.15 to 0.35.

5. The method of claim 1, wherein the pH-adjusting material is at least one selected from the group consisting of lithium hydroxide, sodium hydroxide, potassium hydroxide, rubidium hydroxide, cesium hydroxide and ammonium hydroxide.

6. The method of claim 1, wherein the basic silica suspension comprises silica such that a number of moles thereof is 0.01 to 0.1 to a number of moles of water in the entire zeolite synthesis composition.

7. The method of claim 1, wherein the silica precursor is added at a speed of 0.1 g/min to 1 g/min while stirring.

8. The method of claim 1, wherein the silica precursor is at least one selected from the group consisting of fumed silica, precipitated silica, colloidal silica, sodium silicate, tetramethyl o-silicate, tetraethyl o-silicate, borosilicate and fluorosilicate.

9. The method of claim 2, wherein the silica precursor is dissolved by stirring for 1 hour to 200 hours after adding the silica precursor.

10. The method of claim 1, wherein the alumina aqueous solution is prepared by adding the structure-directing agent and the alumina precursor to water and stirring the same.

11. The method of claim 10, wherein the structure-directing agent and the alumina precursor are independently or simultaneously added to water at a speed of 1 g/min to 10 g/min.

12. The method of claim 1, wherein the alumina precursor is added in an amount such that a molar ratio of silica to alumina (SiO₂/Al₂O₃) falls within the range of 5 to 50.

13. The method of claim 1, wherein the alumina precursor is at least one selected from the group consisting of sodium aluminate, sodium aluminum sulfate and aluminum.

14. The method of claim 1, wherein the structure-directing agent is added in an amount to fall within the range of 1/100 mol to 1/10 mol to 1 mol of silica.

15. The method of claim 1, wherein the structure-directing agent is at least one selected from the group consisting of tetramethyl ammonium bromide, tetramethyl ammonium chloride, tetramethyl ammonium hydroxide, tetraethyl ammonium bromide, tetraethyl ammonium chloride, tetraethyl ammonium hydroxide and tetraethyl ammonium tetrafluoroborate.

16. The method of claim 1, wherein the surfactant aqueous solution is prepared by adding the surfactant to water at a temperature of 20°C to 80°C while stirring.

17. The method of claim 1, wherein the surfactant is added such that a molar concentration thereof is 0.01 to 0.1 in the surfactant aqueous solution.

18. The method of claim 1, wherein the surfactant is at least one selected from the group consisting of cetyltrimethylammonium bromide, cetyltrimethylammonium chloride and cetylpyridinium chloride.

19. The method of claim 1, wherein the mixing is carried out by adding the alumina aqueous solution to the basic silica suspension at a speed of 1 cc/min to 10 cc/min.

20. The method of claim 19, wherein the mixing involves additional stirring for 1 hour to 72 hours after the alumina aqueous solution is added.

21. The method of claim 1, wherein, the zeolite synthesis composition is prepared by adding the surfactant aqueous solution to the silica-alumina aqueous solution at a speed of 1 cc/min to 10 cc/min.

22. The method of claim 1, wherein the gelating is carried out by stirring at a temperature of 20°C to 60°C for 1 hour to 120 hours.

23. The method of claim 1, wherein the crystallizing is carried out by reacting at a temperature of 140°C to 210°C.

24. The method of any one of claims 1 to 23, wherein the crystallizing is carried out in a presence of a seed.

25. A mordenite zeolite having excellent uniformity,
wherein the mordenite zeonite is a secondary particles formed by agglomeration of the primary particles having a micropore,
wherein the secondary particle comprises an interparticle mesopore, and
wherein the secondary particles contain 90% or more of the primary particles having particle size within the range of a most-distributed primary particle size in unit of 10 nm ± 30 nm when measuring particles size for a total of the 100 primary particles by randomly selecting 10 primary particles from each of the 10 SEM images taken with an acceleration voltage of 5.0 kV and 50,000 magnification.
